# EUROPÄISCHE PATENTSCHRIFT

(11) **EP 2 051 848 B1**
(45) Veröffentlichungstag und Bekanntmachung des Hinweises auf die Patenterteilung: **21.03.2012**
(21) Anmeldenummer: 07787906.2
(22) Anmeldetag: 25.07.2007
(51) Int. Cl.: B32B 3/04, B32B 21/00

(54) **LEICHTBAUPLATTE**
LIGHTWEIGHT PANEL
PANNEAU STRUCTURAL LÉGER

(30) Priorität: 14.08.2006 DE 102006038115
(43) Veröffentlichungstag der Anmeldung: 29.04.2009
(73) Patentinhaber: Fritz Egger GmbH & Co. OG, 3105 Unterradlberg (AT)
(72) Erfinder: SCHNEIDER, Gerold, A-2371 Hinterbrühl (AT)
(74) Vertreter: Cohausz & Florack
(86) Internationale Anmeldenummer: PCT/EP2007/057680
(87) Internationale Veröffentlichungsnummer: WO 2008/019929

(56) Entgegenhaltungen:
- EP-A- 0 076 943
- WO-A-03/084740
- DE-A1- 3 046 317
- DE-A1- 3 127 202
- DE-A1- 10 313 055
- DE-U1-202004 001 892
- US-A- 2 839 442
- US-A- 5 006 391
- DATABASE WPI Week 197626 Derwent Publications Ltd., London, GB; AN 1976-48934X XP002463026 & JP 51 054608 A (YAMADA T) 13. Mai 1976 (1976-05-13)
- DATABASE WPI Week 200528 Derwent Publications Ltd., London, GB; AN 2005-273454 XP002463149 & WO 2005/032304 A (LENG L) 14. April 2005 (2005-04-14)

## Beschreibung

Die vorliegende Erfindung betrifft eine Leichtbauplatte, mit zwei Zellulosematerial enthaltenden Decklagen, wobei mindestens eine der Decklagen durch eine Holzwerkstoffplatte gebildet ist, mit einer Mittellage in Form einer Wabe, die zwischen den beiden Decklagen angeordnet ist, und mit einer abgedeckten Schmalfläche, die sich von den beiden Decklagen über die Mittellage erstreckt, wobei zumindest ein Teil eines Endabschnittes mindestens einer der Decklagen winkelig zu einer Längsebene einer der Decklagen verläuft. Ferner betrifft die Erfindung ein Verfahren zur Herstellung einer Leichtbauplatte mit zwei Zellulosematerial enthaltenden Decklagen, wobei mindestens eine der Decklagen durch eine Holzwerkstoffplatte gebildet wird, mit einer Mittellage in Form einer Wabe, die zwischen den beiden Decklagen angeordnet ist, und mit einer abgedeckten Schmalfläche, die sich von den beiden Decklagen über die Mittellage erstreckt.

Leichtbauplatten (LBPL) mit Zellulosematerial enthaltenden Decklagen, beispielsweise Decklagen aus einem Holzwerkstoff, sind aus dem Stand der Technik hinlänglich bekannt. Auch im Möbel- und Innenausbau werden diese seit langer Zeit in vielfältiger Weise verwendet. Haupteinsatzgebiet war und ist hier speziell der Türenbau. So ist es vor allem bei Zimmertüren, die also geringen Anforderungen hinsichtlich des Wärme- und Schallschutzes unterliegen, üblich ein Rahmenelement mit einem Wabenkern beidseitig zu beplanken und dieses dann mit den entsprechenden Bohrungen, Fräsungen, etc. zu einem Türelement weiterzuverarbeiten.

Im gehobenen Einrichtungsbereich wurden ebenfalls Leichbauplatten im Möbelbau eingesetzt, weil durch deren Einsatz sehr große Wandstärken realisiert werden können, die besondere gestalterische Möglichkeiten bieten. In jüngerer Zeit werden auch bei Massenmöbeln verstärkt Leichtbauplatten verwendet, so dass auch ein Einsatz auf breiterem Gebiet wirtschaftlich möglich wird. Damit sind die verschiedenen Vorzüge der Leichtbauplatten einer größeren Schicht von Endverbrauchern zugängig.

Der Hersteller von Möbeln braucht Leichtbauplatten heute nicht mehr selber herzustellen, wie dies früher der Fall war. Mehrere Arbeitsgänge waren dazu notwendig. Zunächst musste ein Rahmen hergestellt werden, eventuell mit mehreren Querriegeln, auf den dann die Decklagen aufgebracht wurden und der die verschiedenen Beschläge aufzunehmen hatte. Zwischen den Decklagen wurden Leichtfaserplatten, mineralische Dämmwolle, Kartonwaben oder ähnliches eingebracht. Damit wurde dem Element mehr Kompaktheit und eventuell auch eine verbesserte Stabilität verliehen. Zumeist mussten in separaten Arbeitsgängen die Deckschichten auch noch aufwändig oberflächenbehandelt werden. So waren als Decklagen furnierte oder anderweitig beschichtete Hartfaserplatten üblich, wobei das fertige Element auch erst durch abschließendes Lackieren seine endgültige Oberfläche erhalten kann.

Heute werden Leichtbauplatten in zunehmendem Maß auch industriell gefertigt. Dazu wird eine leichte Mittellage mit Deckplatten versehen, zumeist durch Klebung, so dass ein großformatiger, rahmenloser Verbund entsteht. Je nach geforderter Stabilität der Platte werden unterschiedlich dicke Deckplatten, zumeist aus einem Holzwerkstoff wie Span-oder Faserplatte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein. Als Mittellagen werden Kartonwaben oder Schaumstoffplatten bevorzugt. Für bestimmte Verwendungszwecke sind möglicher Weise auch Wabenmaterialien aus anderen Materialien als Papier oder Karton sinnvoll. So können dafür dünnste Plattenmaterialien oder auch dünnwandiges Metall, beispielsweise aus Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen versehen sind grundsätzlich alle Materialien zum Einsatz als leichte Mittellage möglich. So werden dafür beispielsweise auch Holzarten herangezogen, die zwar nicht besonders geringes Gewicht aufweisen, dafür aber gut verfügbar sind und sich gut mit zerspanenden Werkzeugen bearbeiten lassen. Auch sind leichte Mittellagen aus Halmbündeln, die miteinander verbunden zu flächigen Gebilden aufgeschnitten werden, sodass dann die Länge der Halmabschnitte der Dicke der Mittellage entspricht, bekannt.

Die so hergestellten Platten werden dann in die gewünschte Größe aufgeteilt. Je nach vorgesehenem Einsatz der erhaltenen Elemente werden diese dann mit Kanten oder Riegeln versehen oder ein zumindest teilweise umlaufender Rahmen wird nachträglich eingebracht. Dies geschieht durch Ausfräsen des Kantenbereichs und nachfolgendes Einkleben eines Rahmenprofils, das wiederum zumeist aus einem Holzwerkstoff besteht. Durch eine entsprechende Profilierung der Kantenausfräsung ist es dabei auch möglich eine Kraft-und/oder formschlüssige Fixierung zu erreichen. Letzteres wird erreicht, indem ein komplementär geformtes Profil durch elastische Verformung der verbliebenen Deckplattenschicht formschlüssig gehalten wird. In vorteilhafter Weise können Kraft- und/oder Formschluss und eine Klebeverbindung kombiniert werden.

Zudem ist es bekannt, die Kanten und Schmalflächen von beschichteten Massivplatten mit Post- und Softformingverfahren nachzuarbeiten.

Dabei wird im Allgemeinen unter einem Postformingverfahren eine Flächenbeschichtung der Schmalfläche verstanden, bei der als Kantenmaterial das Beschichtungsmaterial der Ober-und/oder Unterseite benutzt wird. Dabei wird zunächst das Beschichtungsmaterial auf die Ober- beziehungsweise Unterseite eines zu beschichtenden Plattenmaterials aufgebracht. Im Bereich der zu beschichtenden Schmalfläche wird dann ein ausreichender Materialüberstand belassen oder durch geeignetes Abfräsen der Platte erzeugt ("direct Postforming"), der auf geeignete Weise, üblicherweise durch Wärmezufuhr, flexibilisiert wird. Anschließend wird der flexibilisierte Materialüberstand um die zu beschichtende Schmalfläche gebogen und verklebt. Insbesondere kann die Schmalfläche eine Profilierung aufweisen, beispielsweise wird bei Küchenarbeitsplatten ein Viertelstabprofil bevorzugt.

Unter einem Softformingverfahren wird im Allgemeinen ein nachträgliches Beschichten einer zunächst profilierten Schmalfläche mit einem speziell für die Schmalfläche zugeschnittenen Material verstanden. Es kann sich dabei um das gleiche Material handeln, das für die Beschichtung der Großflächen verwendet wurde.

Die WO 03/084740 A1 offenbart eine Leichtbauplatte der eingangs genannten Art mit zwei Decklagen aus einer Holzwerkstoffplatte, umfassend eine Strukturlage aus Holzmaterial und eine auflaminierte Dekorlage, mit einer Mittellage, welche zwischen beiden Decklagen angeordnet ist und einen Rahmen und ein davon umschlossenes Füllmaterial mit zum Beispiel wabenförmiger Struktur aufweist, sowie mit einer abgedeckten Schmalfläche, welche sich von den beiden Decklagen über die Mittellage erstreckt, wobei ein Endabschnitt einer Decklage winkelig zur Längsebene der Decklagen verläuft. Die betreffende Decklage ist im fraglichen Endabschnitt durch eine Schwächung des Querschnitts mittels Ausnehmungen verformbar und stößt an einer Kante mit der anderen Decklage zusammen. Bei der Herstellung dieser Leichtbauplatte wird insbesondere ein Endabschnitt der betreffenden Decklage durch Einfräsen von Nuten formbar gemacht, die Decklage anschließend auf die Mittellage aufgesetzt und der Endabschnitt schließlich um die Schmalfläche gebogen.

Eine Leichtbauplatte der zuvor beschriebenen Art hat aber ein relativ hohes Gewicht.

Der Erfindung liegt somit das technische Problem zugrunde, eine Leichtbauplatte der eingangs genannten Art anzugeben, mit der eine Gewichtsreduzierung erreicht wird.

Das zuvor aufgezeigte technische Problem wird erfindungsgemäß bei einer Leichtbauplatte der eingangs genannten Art dadurch gelöst, dass ein Schaumstoff im Bereich der Schmalfläche vorgesehen ist.

Indem ein Schaumstoff im Bereich der Schmalfläche appliziert wird, läßt sich in diesem Bereich auf einen Riegel oder Rahmen verzichten, wodurch das Gewicht der Leichtbauplatte insgesamt reduziert wird.

Erfindungsgemäß wurde außerdem erkannt, dass durch geeignete Ausgestaltung des Kantenbereichs der Leichbauplatte, der die Schmalfläche aufweist, zumindest eine der beiden Zellulosematerial enthaltenden Decklagen individuell verformt und insbesondere als Verstärkung des Kantenbereichs eingesetzt werden kann. Da das Material der Decklage eine höhere Stabilität als das der Mittellage aufweist und damit höher beansprucht werden kann, ergibt sich erfindungsgemäß auf überraschend einfache Weise ein individuell geformter Endbereich und vorzugsweise eine besonders stabiler Kantenbereich einer Leichbauplatte.

Ausgestaltungen der erfindungsgemäßen Leichtbauplatte sind Gegenstand der Unteransprüche und werden im Folgenden näher beschrieben.

Diese Leichtbauplatte hat trotz ihres einfachen Aufbaus eine stabile und stoßfeste Kante, was insbesondere die Anwendung der Leichtbauplatte in Bereichen hoher Beanspruchung, beispielsweise als Küchenarbeitsplatte oder auch Tischplatte, ohne zwingende zusätzliche Verstärkungselemente ermöglicht. Durch den winkeligen Verlauf einer der Decklagen oder beider Decklagen relativ zu einer der Längsebenen wird auch eine individuelle Formgebung des Endbereichs ermöglicht, durch die auf einfache Weise eine Vielzahl unterschiedlicher Abschlüsse erreicht werden kann.

Insbesondere auf dem Gebiet der Küchenarbeitsplatten kann auf diese Weise ein Bauteil geschaffen werden, das neben dem eigentlichen Arbeitsbereich gleichzeitig eine einstückig daran angeformte Abschlussleiste und/oder Abschlusskante aufweist. Häufig weisen Küchenarbeitsplatten an ihrer der Wand zugewandten Seite eine Abschlussleiste auf, die erfindungsgemäß auf einfache Weise dadurch gebildet werden kann, dass ein Teil des Endabschnittes der oberen Decklage nach oben gebogen wird. Alternativ oder zusätzlich kann eine Abschlusskante erfindungsgemäß dadurch geschaffen werden, dass ein Teil des Endabschnittes, der beispielsweise an der der Wand abgewandten Seite der Leichtbauplatte angeordnet ist, nach unten gebogen wird. In beiden Fällen wird durch das Verformen des Endabschnitts eine Oberfläche der Leichtbauplatte geschaffen, die überall, auch im Bereich der Abschlussleiste oder Abschlusskante, die gleichen guten mechanisch technologischen Eigenschaften aufweisen kann, insbesondere eine hohe Stabilität und Stoßfestigkeit. Mit anderen Worten, erfindungsgemäß kann nicht nur ein verstärkter Kantenbereich effektiver hergestellt werden, sondern es ist auch möglich, mit einfachen Mitteln individuell geformte Endbereiche der Leichtbauplatte mit einer hohen Beanspruchbarkeit zu erzeugen.

Wie bereits zuvor angedeutet, kann erfindungsgemäß zumindest ein Teil des Endabschnittes mindestens einer der Decklagen in verschiedenen Richtungen relativ zu einer Längsebene einer der Decklagen verlaufen, beispielsweise nach oben, um eine Abschlussleiste zu erzeugen, oder nach unten, um eine Abschlusskante zu erzeugen. Dabei sind in diesem Zusammenhang die Begriffe "oben" und "unten" entsprechend dem Schichtaufbau der Leichtbauplatte definiert, das heißt, die Leichtbauplatte hat oben eine Decklage, unten eine Decklage und dazwischen eine Mittellage.

Die individuelle Formgebung des Endbereichs der erfindungsgemäßen Leichtbauplatte wird beispielsweise dadurch erreicht, dass der Teil des Endabschnittes der einen Decklage über die Längsebene der anderen Decklage hinaus verläuft. Der Teil des Endabschnitts kann aber auch genau bis zur Längsebene der anderen Decklage verlaufen oder auch schon vor dieser Längsebene enden. Selbstverständlich kann der Teil des Endabschnittes der einen Decklage auch von der Längsebene der anderen Decklage weg verlaufen, sich also in die andere Richtung erstrecken.

Es ist auch denkbar, dass ein Teil des Endabschnittes entlang der Längsebene einer der Decklagen oder parallel oder senkrecht zur Längsebene einer der Decklagen verläuft. Auf diese Weise können mit einfachen Mitteln Endbereiche mit nahezu beliebiger Formgebung geschaffen werden, die gleichzeitig eine hohe Stabilität und Stoßfestigkeit aufweisen.

Um den Endabschnitt der mindestens einen Decklage die Schmalfläche abdeckend anordnen zu können, ist die Decklage gemäß einer vorteilhaften Ausgestaltung der erfindungsgemäßen Leichtbauplatte im Endabschnitt verformbar. Dabei kann die Decklage im Endabschnitt zumindest abschnittweise eine Schwächung des Querschnitts und insbesondere Ausnehmungen, vorzugsweise Nuten und/oder Bohrungen, aufweisen. Die Anbringung von Nuten, entweder auf der der anderen Decklage zugewandten oder abgewandten Seite, hat sich als besonders vorteilhaft erwiesen, da diese maschinell auf einfache Weise hergestellt werden können und gleichzeitig eine effektive Schwächung des Querschnitts hervorrufen. Nuten, insbesondere wenn diese auf der der anderen Decklage zugewandten Seite angeordnet sind, haben auch den Vorteil, dass sie eine Verformung des Endabschnitts auf einfache Weise ohne Beschädigung des um die Nuten befindlichen Materials ermöglichen.

Es sei nochmals deutlich hervorgehoben, dass eine Verformung der jeweiligen Decklagen im Endabschnitt zu keiner Beschädigung des Materials, insbesondere zu keinem Materialbrechen, führt. Im Gegenteil, der Endabschnitt ist im Bereich der Verformung so ausgebildet, insbesondere so elastisch und/oder flexibel, dass sogar Biegungen von 90° oder mehr zumindest an der nach außen gerichteten Oberfläche der Decklage weder Risse noch Brüche hervorrufen. Dabei kann das Material der Decklage nur vorübergehend für den Verformungsvorgang oder auch dauerhaft mit der gewünschten Elastizität bzw. Flexibilität versehen werden.

Vorzugsweise ist der die Schmalfläche abdeckende Endabschnitt im Querschnitt viertelkreisförmig oder halbkreisförmig ausgebildet, wodurch das Risiko von Beschädigungen der Oberfläche bei Stößen auf die Kante reduziert wird. Auch wird dadurch das Risiko von Beschädigungen des Decklagenmaterials während der Verformung verringert.

Bei der Leichtbauplatte kann mindestens eine der Decklagen ein Zellulosematerial, beispielsweise Lignozellulose, aufweisen oder als Sperrholzplatte, Spanplatte, OSB-Platte (Oriented Strands Board-Platte) oder Faserplatte, insbesondere Hartfaserplatte, mitteldichte Faserplatte oder hochdichte Faserplatte, ausgebildet sein. Auch ein Zellulose-Kunststoff-Compound ist als Bestandteil einer Decklage denkbar. Ausführungen der Decklage in dieser Art haben den Vorteil, dass sie einerseits durch Schwächung des Querschnitts auf einfache Weise verformbar gemacht werden können und andererseits auf der späteren Außenseite eine relativ hohe Stoßfestigkeit und Stabilität aufweisen.

Die Mittellage der Leichtbauplatte kann eine Wabe, insbesondere Kartonwabe, aufweisen. Dadurch kann das Gewicht der Leichtbauplatte unter Beibehaltung einer relativ hohen Stabilität auf ein Minimum reduziert werden.

Bei der erfindungsgemäßen Leichbauplatte ist zur Erhöhung der Stabilität, insbesondere der Formstabilität der Kanten, vorzugsweise der Endabschnitt der einen Decklage zumindest abschnittweise mit der anderen Decklage und/oder der Mittellage verbunden. Die Verbindung kann durch einen Klebstoff, insbesondere Schmelzklebstoff oder Montageschaum, und/oder durch mechanische Befestigungsmittel, insbesondere Profile, Schrauben oder Nägel, erfolgt sein.

Der erfindungsgemäß vorgesehene Schaumstoff kann, wie auch der zu Klebezwecken einsetzbare Montageschaum, den Raum zwischen der Schmalfläche und dem darüber verlaufenden Endabschnitt effektiv ausfüllen und abdichten. Auf diese Weise wird beispielsweise das Eindringen von Feuchtigkeit in das Innere der Leichtbauplatte im Bereich des Stoßes, in welchem der Endabschnitt befestigt ist, effektiv verhindert. Dabei kann der Schaumstoff zumindest abschnittweise an die Form des die Schmalfläche abdeckenden Endabschnitts angepasst sein und insbesondere der Form des Endabschnitts entsprechen.

Zusätzlich kann die erfindungsgemäße Leichtbauplatte, beispielsweise zur weiteren Abdichtung, zur Oberflächenveredelung, zur Erhöhung der mechanischtechnologischen Eigenschaften der Oberfläche oder zu Dekorzwecken, eine Beschichtung aufweisen. Die Beschichtung kann ein Furnier, ein Laminat, ein Schichtstoff, eine Farbe und/oder ein Lack sein.

Gemäß einer vorteilhaften Ausgestaltung der erfindungsgemäßen Leichtbauplatte stoßen der die Schmalflächen abdeckende Endabschnitt der einen Decklage und die andere Decklage zumindest in einem Abschnitt zusammen. In diesem Abschnitt, in welchem die beiden Decklagen zusammenstoßen, kann eine der Decklagen mindestens eine Nut aufweisen. Auch können in diesem Abschnitt eine oder beide Decklagen eine Verzahnung aufweisen, wobei in dem Fall, dass beide Decklagen eine solche aufweisen, die jeweiligen Verzahnungen ineinander greifen können. Auch kann in diesem Abschnitt eine Ausnehmung vorgesehen sein, die insbesondere mit Versiegelungsmasse versehen ist. Auch in der mindestens einen Nut oder Verzahnung kann Versiegelungsmasse vorgesehen sein.

Die Aufgabe wird ferner bei einem Verfahren der eingangs genannten Art, insbesondere einem Verfahren zur Herstellung einer wie zuvor beschriebenen Leichtbauplatte, dadurch gelöst, dass ein freiliegender Endabschnitt mindestens einer Decklage bereitgestellt wird, der sich zumindest teilweise über eine Ebene, in der zumindest ein Teil der Schmalfläche verläuft, hinaus erstreckt, dass die Decklage im Bereich des Endabschnittes formbar gemacht wird, dass zumindest ein Teil des freiliegenden Endabschnittes winkelig zu einer Längsebene einer der Decklagen verlaufend angeordnet wird, und dass nach dem Bereitstellen des freiliegenden Endabschnitts ein Schaumstoff im Bereich der Schmalfläche appliziert wird. Vorzugsweise ist vorgesehen, dass zumindest ein Teil des freiliegenden Endabschnittes von der Längsebene der einen Decklage in Richtung der Längsebene der anderen Decklage verlaufend und die Schmalfläche zumindest teilweise abdeckend angeordnet wird.

Das erfindungsgemäße Verfahren hat den Vorteil, dass durch das Applizieren eines Schaumstoffs im Bereich der Schmalfläche auf einen Rahmen oder Riegel verzichtet werden kann, wodurch die hergestellte Leichtbauplatte deutlich leichter wird.

Bei dem Verfahren zur Herstellung einer Leichtbauplatte wird auch, um eine Abschlusskante zu bilden, vorzugsweise lediglich der Endabschnitt der Decklage, der später die Kante bildet, so bereitgestellt, dass dieser mit relativ geringem Kraftaufwand über den Bereich der Schmalfläche und vorzugsweise auch über den Bereich der Stirnfläche der anderen Decklage geführt werden kann.

Wie gesagt können sowohl Abschlusskanten als auch Abschlussleisten gebildet beziehungsweise angeformt werden, da erfindungsgemäß eine Vielzahl von Möglichkeiten der Formgebung des Endbereichs der Leichtbauplatte geschaffen werden können. Dazu ist beispielsweise denkbar, dass der Teil des Endabschnittes der einen Decklage über die Längsebene der anderen Decklage hinaus verlaufend angeordnet wird. Es ist auch möglich, dass ein Teil des Endabschnittes entlang der Längsebene einer der Decklagen verlaufend angeordnet wird und/oder ein Teil des Endabschnittes parallel oder senkrecht zur Längsebene einer der Decklagen verlaufend angeordnet wird.

Es ist erfindungsgemäß auch möglich, aneinandergrenzende Kanten, die in einer Ecke der Leichtbauplatte beispielsweise senkrecht aufeinander treffen, zu schaffen. Dazu kann die zu formende Decklage im Bereich der späteren Ecke eine entsprechende Ausparung, eine sogenannte Ausklinkung, sowie im Bereich der beiden späteren Kanten jeweils einen freiliegenden Endabschnitt aufweisen.

Das Bereitstellen des freiliegenden Endabschnitts kann dadurch erfolgen, dass im späteren Kantenbereich Material der Mittellage und ggf. auch der gegenüberliegenden Decklage entfernt wird, nachdem die beiden Decklagen und die Mittellage zu einem plattenförmigen Körper verbunden worden sind. Es ist aber auch denkbar, vor dem Anordnen der den Endabschnitt aufweisenden Decklage diese von vorne herein um das Maß des gewünschten Endabschnitts größer auszubilden, so dass schon bei dem Verbinden der jeweiligen Decklage mit der Mittellage ein Teil der Decklage, das heißt der Endabschnitt, über die Schmalfläche übersteht.

Da auch denkbar ist, dass beide Decklagen einen Endabschnitt aufweisen, der in Richtung der jeweils anderen Decklage verlaufend und die Schmalfläche, die in diesem Fall nur von der Stirnseite der Mittellage gebildet wird, abdeckend angeordnet wird, ist es auch denkbar, beide Decklagen mit einem jeweils freiliegenden Endabschnitt zu versehen, der über die Schmalflächenebene hinaussteht.

Der die Schmalfläche abdeckende Endabschnitt wird vorteilhafterweise zumindest abschnittweise fixiert. Das Fixieren kann durch Klebung, insbesondere mittels Schmelzklebstoff oder Montageschaum, und/oder mechanische Befestigungsmittel, insbesondere Profile, Schrauben oder Nägel, erfolgen. Dabei kann der Endabschnitt zum Fixieren mit der anderen Decklage und/oder der Mittellage verbunden werden.

Erfindungsgemäß kann es sich bei dem im Bereich der Schmalfläche applizierten Schaumstoff um einen solchen handeln, der im Bereich der Schmalfläche expandiert. Auf diese Weise kann das Innere der Leichtbauplatte langfristig vor dem Eindringen von Feuchtigkeit geschützt werden.

Wie bereits zuvor beschrieben stoßen der über die Schmalfläche verlaufende Endabschnitt der einen Decklage und die andere Decklage vorzugsweise zumindest in einen Abschnitt zusammen, wenn die Schmalfläche durch den Endabschnitt der einen Decklage oder durch beide Decklagenendabschnitte abgedeckt wird. Dabei kann bei dem erfindungsgemäßen Verfahren in dem Abschnitt mindestens eine der Decklagen mit mindestens einer Nut oder Verzahnung versehen werden. Auch kann in dem Abschnitt eine Ausnehmung vorgesehen werden, die insbesondere mit Versiegelungsmasse versehen wird. Die Versiegelungsmasse kann auch in der mindestens einen Nut oder Verzahnung vorgesehen werden.

Gemäß einer besonderen Ausgestaltung des zuvor beschriebenen Verfahrens wird, wie bereits angedeutet, der freigelegte Endabschnitt bereitgestellt, indem die Mittellage und vorzugsweise die gegenüberliegende Decklage zumindest abschnittweise entfernt werden. Das Entfernen kann durch zerspanende Bearbeitung, insbesondere Fräsen, erfolgen. Vorteilhafterweise kann bei dem Entfernen der Mittellage und ggf. der dem freizulegenden Endabschnitt gegenüberliegenden Decklage gleichzeitig eine Bearbeitung, insbesondere zerspanende Bearbeitung, des besagten Endabschnitts erfolgen, um diesen formbar zu machen. Der freiliegende Endabschnitt kann formbar gemacht werden, indem der Querschnitt geschwächt wird und/oder indem der freiliegende Endabschnitt zumindest abschnittweise einer Temperaturänderung und/oder einer Feuchtigkeitsänderung unterzogen wird. Das Schwächen des Querschnitts kann auch durch Reduzieren der Materialstärke des Endabschnitts, insbesondere durch Einfräsen von Nuten und/oder Bohrungen, erfolgen. Es ist auch denkbar, die Materialstärke in einem größeren Bereich, also flächig, zu reduzieren.

Bei dem erfindungsgemäßen Verfahren kann die Leichtbauplatte vor oder nach dem Schritt, in welchem der freiliegende Endabschnitt verformt wird, auch beschichtet werden. Die Leichtbauplatte kann dabei mit einem Furnier, einem Laminat, einem Schichtstoff, einer Farbe oder einem Lack beschichtet werden.

Die Erfindung wird im Folgenden anhand von Ausführungsbeispielen näher erläutert, wozu auf die beigefügte Zeichnung Bezug genommen wird. In der Zeichnung zeigen:
- Fig. 1a) und b): eine schematische Schnittansicht von Verfahrensschritten gemäß einem ersten Ausführungsbeispiel;
- Fig. 2a) bis c): eine schematische Schnittansicht von Verfahrensschritten gemäß weiteren Ausführungsbeispielen;
- Fig. 3a) bis c): Ausführungsbeispiele einer Leichtbauplatte nach ihrer Herstellung in Schnittansicht;
- Fig. 4a) und b): Ausführungsbeispiele einer Leichtbauplatte bei ihrer Herstellung in Schnittansicht;
- Fig. 5a) bis c): eine schematische Schnittansicht von Verfahrensschritten gemäß weiteren Ausführungsbeispielen;
- Fig. 6a) und b): eine schematische Schnittansicht von Verfahrensschritten gemäß weiteren Ausführungsbeispielen; und
- Fig. 7a) und b): eine schematische Schnittansicht von Verfahrensschritten gemäß weiteren Ausführungsbeispielen.

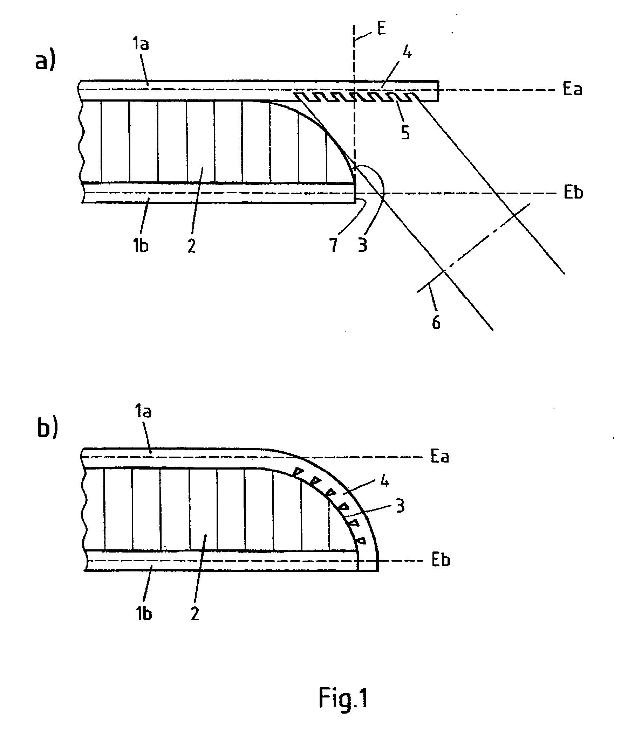

Fig. 1 zeigt während ihrer Herstellung eine Leichtbauplatte mit zwei Decklagen 1a, 1b - hier als OSB-Platten ausgebildet -, mit einer Mittellage 2 - hier als Kartonwabe ausgebildet - , die zwischen den beiden Decklagen angeordnet ist, und mit einer abzudeckenden Schmalfläche 3, die im vorliegenden Fall viertelkreisförmig ausgebildet ist.

Ein Endabschnitt 4 der oberen Decklage 1a wird dabei, wie anhand der Figuren 1a) und b) dargestellt ist, in Richtung der unteren Decklage 1b über die Schmalfläche 4 verlaufend angeordnet. Dabei zeigt Fig. 1a) den Zustand, in welchem der Endabschnitt 4 durch Entfernen von Teilen der Mittelage 2 und der unteren Decklage 1b freigelegt wurde und über eine Schmalflächenebene E hinausgeht, in der die Schmalfläche 3 teilweise verläuft und die im dargestellten Fall senkrecht zur Ausrichtung der Decklagen 1a, 1b und der Mittellage 2 sowie der Längsebenen Ea,Eb verläuft. Fig. 1b) zeigt den Zustand, nachdem der freigelegte Endabschnitt 4 der einen Decklage 1a in Richtung der anderen Decklage 1b über die Schmalfläche 3 verlaufend und diese abdeckend angeordnet wurde.

Um eine gute Verformbarkeit des Endabschnittes 4 der oberen Decklage 1a zu erreichen, sind, wie in Fig. 1a) dargestellt, eine Vielzahl paralleler Nuten 5, die im vorliegenden Fall winkelig zur Schmalflächenebene E bzw. zur Ausrichtung der Decklage 1a verlaufen, durch eine schematisch dargestellte, rotierende Fräsmaschine 6 vorgesehen worden. Die Fräsmaschine 6 hat dabei einen so breiten Arbeitsbereich, dass mit einem einzigen Schnitt alle für die Verformung notwendigen Nuten 5 hergestellt werden können.

Nachdem die Nuten 5 in den freigelegten Endabschnitt 4 der Decklage 1a eingebracht worden sind, wird der Endabschnitt 4 in Richtung der anderen Decklage 1b gebogen, wobei ein Teil des Endabschnittes 4 winkelig zu den Längsebenen Ea und Eb der Decklagen 1a und 1b verläuft, und deckt, wie Fig. 1b) zeigt, dann die Schmalfläche 3 ab. Dabei liegt im dargestellten Ausführungsbeispiel die Innenseite der Decklage 1a im Bereich des Endabschnitts 4 bündig an der Außenseite der Mittellage 2 und der Stirnfläche 7 der unteren Decklage 1b, die ebenfalls Bestandteil der Schmalfläche 3 ist, an. Zur Fixierung des umgebogenen Endabschnitts 4 wird dieser durch Verklebung, hier durch Verwendung eines Schmelzklebers (nicht dargestellt), mit der Schmalfläche 3 verbunden. Auf diese Weise wird verhindert, dass sich nach dem Umformen der Endabschnitt 4 wieder von der Schmalfläche 3 löst.

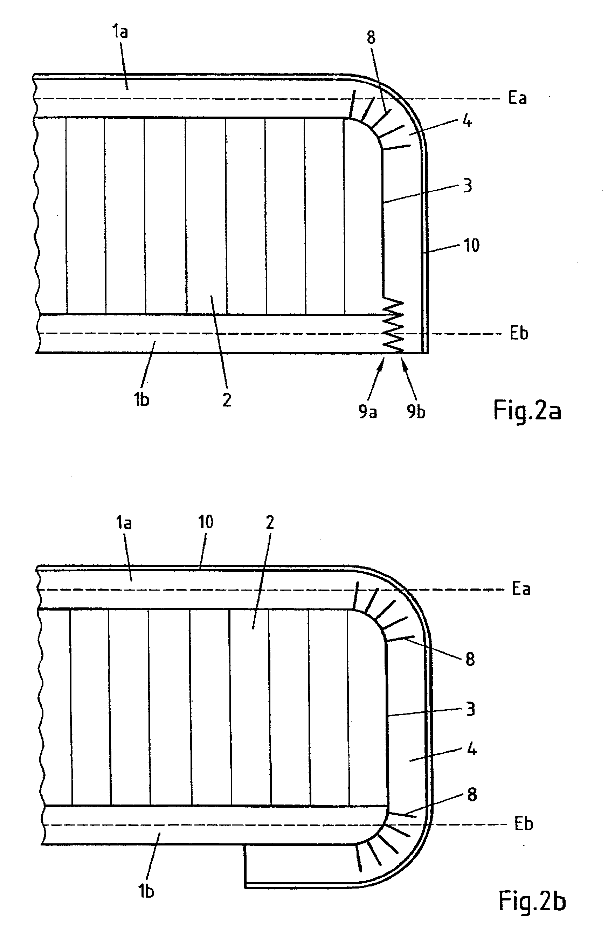

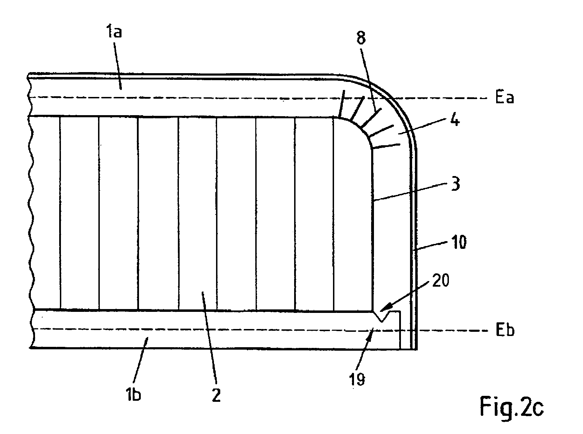

Weitere Ausführungsbeispiele des erfindungsgemäßen Verfahrens zur Herstellung einer Leichtbauplatte sind in Fig. 2 dargestellt. Auch hier sind zwei Decklagen 1a, 1b als OSB-Platte ausgebildet und oberhalb und unterhalb einer als Kartonwabe ausgebildeten Mittellage 2 angeordnet. Im Unterschied zum vorangehend beschriebenen Ausführungsbeispiel wird bei der in Fig. 2 dargestellten Leichtbauplatte statt einer Vielzahl von Nuten 5 eine Vielzahl von Schlitzen 8 vorgesehen, um ein Umformen der Decklage 1a in Richtung der gegenüberliegenden Decklage 1b zu ermöglichen. Dabei werden die Schlitze 8 nur in einem relativ kleinen Abschnitt des Endabschnitts 4, nämlich nur dort, wo der Verlauf der Decklage 1a eine Richtungsänderung erfährt, angeordnet.

Am äußeren Ende des Endabschnitts 4 wird, wie Figur 2a) zeigt, an der der anderen Decklage 1b zugewandten Seite eine Verzahnung 9a vorgesehen, die in eine entsprechend geformte Verzahnung 9b in der Schmalfläche 3 eingreift, um zu verhindern, dass sich der Endabschnitt 4 quer zum Verlauf der Mittellage 2 und der unteren Decklage 1b verschiebt.

Im Bereich der Verzahnungen 9a, 9b wird der über die Schmalfläche 3 verlaufende Endabschnitt 4 der oberen Decklage 1a mit der Schmalfläche 3 verklebt.

Zum Verbinden der oberen Decklagen 1a mit der unteren Decklage 1b ist, wie Figur 2b) zeigt, statt Verzahnungen vorgesehen, dass ein Teil des Endabschnittes 4 parallel zur Längsebene Eb der unteren Decklage 1b verläuft, wobei die Innenseite des Endabschnittes 4 mit der Außenseite der Decklage 1b verklebt wird. Ferner ist ein weiterer Bereich mit einer Vielzahl von Schlitzen 8 vorgesehen, um zu ermöglichen, dass die obere Decklage 1a in ihrem Endabschnitt zweimal um jeweils 90° gebogen werden kann, so dass schließlich die Innenseite des Endabschnitts der einen Decklage 1a an der Außenseite der anderen Decklage 1b zu liegen kommt.

Das Ausführungsbeispiel in Fig. 2c) entspricht im wesentlichen dem in Fig. 2a), wobei jedoch statt einer Verzahnung nunmehr eine Rastverbindung in Form einer Nut/Feder-Verbindung vorgesehen wird. Beim Umbiegen des Endabschnittes 4 verrastet das Federprofil 20 der Decklage 1a im entsprechenden Nutprofil 19 der Decklage 1b, so dass allein schon durch die Verrastung zumindest eine Vorfixierung erfolgt. Zur endgültigen Fixierung kann dann beispielsweise eine Verklebung erfolgen. Ferner überlappt die Decklage 1a mit der Stirnkante der Decklage 1b, so dass die Leichtbauplattenschmalseite ohne Unterbrechung beschichtet werden kann.

Ferner wird bei den in den Figuren 2a) bis c) dargestellten Leichtbauplatten jeweils auf der oberen Decklage 1a eine Beschichtung 10 in Form eines Furniers aufgebracht. Eine solche Leichtbauplatte kann beispielsweise als Küchenarbeitsplatte verwendet werden.

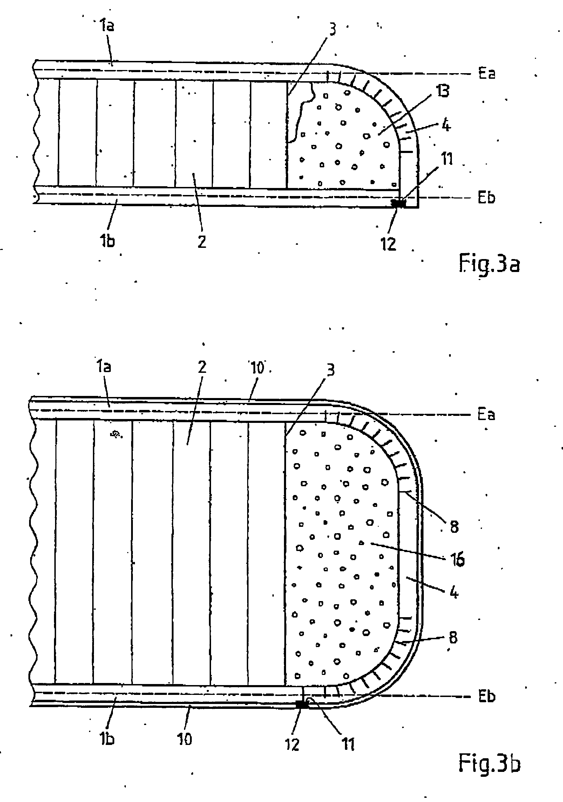

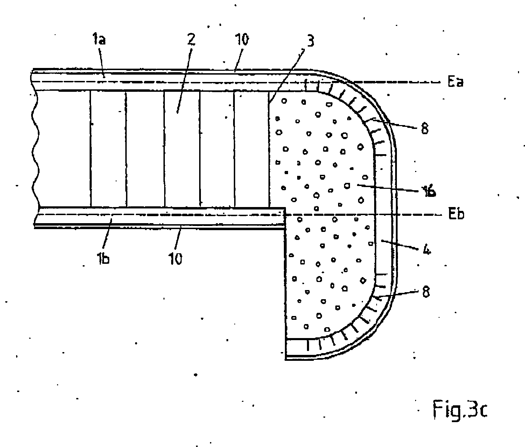

Ausführungsbeispiele einer Leichtbauplatte sind in Fig. 3 dargestellt. Bei diesen Ausführungsbeispielen, welche im wesentlichen den Ausführungsbeispielen aus Fig. 2 entsprechen, ist am äußeren Ende des Endabschnitts 4 ebenfalls keine Verzahnung vorgesehen, sondern eine Ausnehmung 11. Die Ausnehmung 11 setzt sich an entsprechender Stelle am äußeren Ende der anderen Decklage 1b fort.

Zur Vermeidung eines Eindringens von Feuchtigkeit ins Innere der Leichtbauplatte ist die Ausnehmung 11 mit einer Versiegelungsmasse 12 versehen.

Zusätzlich, ebenfalls zum Schutz des Innern der Leichtbauplatte vor dem Eindringen von Feuchtigkeit, ist im Bereich der Schmalfläche 3 ein Schaumstoff 13 appliziert, der expandiert ist. Dieser Schaumstoff dient gleichzeitig als Montageschaum, der den Endabschnitt 4 im die Schmalfläche 3 abdeckenden Zustand fixiert.

Die Figuren 3a) und b) unterscheiden sich dadurch, dass im einen Fall die obere Decklage 1a im Endabschnitt 4 nur einmal um 90° gebogen ist, wobei hierzu Schlitze 8 vorgesehen sind (Fig. 3a)), und im anderen Fall die obere Decklage 1a) im Endabschnitt 4 zweimal um jeweils 90° gebogen ist (Fig. 3b)). In letzterem Fall stößt dabei die Stirnseite der oberen Decklage 1a an die Stirnseite der unteren Decklage 1b, wobei in diesem Bereich die mit der Versiegelungsmasse 12 versehene Ausnehmung 11 vorgesehen ist. Ferner ist gemäß Fig. 3b), bei der nicht erfindungsgemäß anstatt des Schaumstoffs ein Riegel 16 aus einem Holzwerkstoff vorgesehen ist, eine zusätzliche Beschichtung auf den Außenseiten der beiden Decklagen 1a und 1b vorgesehen, wohingegen auf eine solche Beschichtung gemäß Fig. 3a) verzichtet wurde. Fig. 3c) zeigt eine ähnliche Variante wie Fig. 3b), wobei nämlich auch hier der Endabschnitt 4 zweimal um jeweils 90° gebogen worden ist und zur Schwächung des Querschnittes Schlitze 8 vorgesehen sind.

Jedoch stößt gemäß Fig. 3c) die Stirnseite der oberen Decklage 1a nicht an die Stirnseite der unteren Decklage 1b, da ein Teil des Endabschnitts 4, nämlich der senkrecht zu den Längsebenen Ea und Eb verlaufende Teil, über die Längsebene Eb hinaus verläuft. Auf diese Weise wird eine Abschlusskante geschaffen, die nicht nur im Bereich der Schmalfläche 3 der Leichtbauplatte verläuft, sondern sich nach unten weiter fortsetzt, um eine nach unten gerichtete Auskragung zu bilden. Eine solche Abschlusskante kann vorteilhafterweise bei einer Küchenarbeitsplatte im vorderen, dem Anwender zugewandten Bereich Anwendung finden.

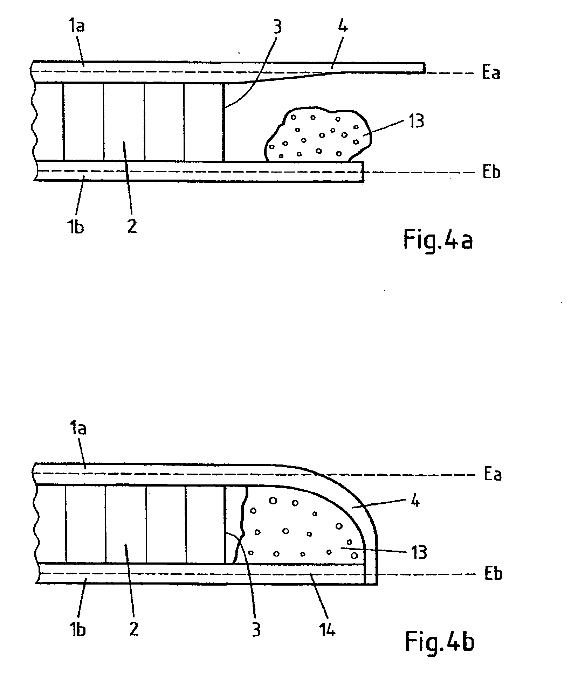

Das Applizieren des Schaumstoffs 13 ist beispielhaft in den Figuren 4a) und b) dargestellt. So wird der Schaumstoff 13 vor dem Umformen des Endabschnitts 4 auf einen im vorliegenden Fall freiliegenden Endabschnitt 14 der unteren Decklage 1b aufgebracht. Anschließend wird der Endabschnitt 4 der einen Decklage 1a in Richtung der anderen Decklage 1b über die Schmalfläche 3 verlaufend angeordnet. Die Schmalfläche 3 kommt bei diesem Ausführungsbeispiel nicht unmittelbar mit der Innenseite des Endabschnitts 4 in Kontakt, sondern wird von diesem aber dennoch abgedeckt. Da sich der applizierte Schaumstoff 13 in dem Hohlraum zwischen Endabschnitt 4 und Schmalfläche 3 ausdehnt, ist gewährleistet, dass die Decklage 1a und die Decklage 1b im Kantenbereich zum Platteninneren hin ausreichend unterstützt sind und nicht bei Druck nachgeben. Gleichzeitig hat der Schaumstoff 13 auch eine ausreichende Klebewirkung, um den Endabschnitt 4 zu fixieren, und dient gleichzeitig als Feuchtigkeitssperre.

In den Figuren 4a) und b) ist ferner dargestellt, dass die Decklage 1a im Bereich des Endabschnittes 4 durch eine Schwächung des Querschnitts der Decklage 1a formbar gemacht werden kann. So ist die Materialstärke im Bereich des Endabschnitts 4 deutlich kleiner als im übrigen Bereich der Decklage 1a.

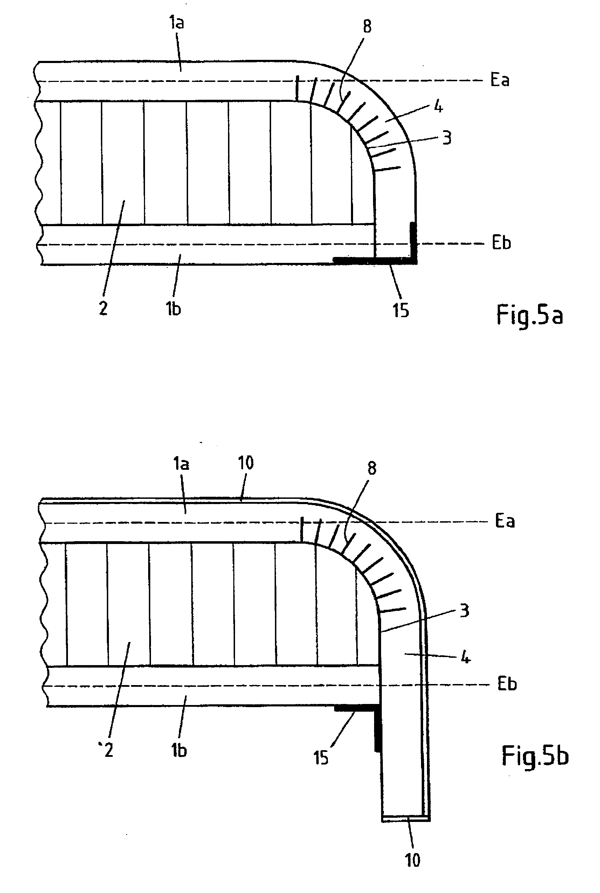

Fig. 5a) zeigt ein Ausführungsbeispiel, welches im wesentlichen den Ausführungsbeispielen aus Fig. 2 entspricht, wobei jedoch statt Verzahnungen als mechanisches Befestigungsmittel ein Profil 15 vorgesehen wird, welches im vorliegenden Fall einen winkelförmigen Querschnitt aufweist, wobei der eine Schenkel des Profils 15 mit der von der Schmalfläche 3 abgewandten Seite des Endabschnitts 4 verklebt wird und der andere Schenkel mit der Unterseite der unteren Decklage 1b.

Fig. 5b) zeigt eine ähnliche Variante wie Fig. 5a), wobei jedoch der eine Schenkel des Profils 15 mit der der Schmalfläche 3 zugewandten Seite des Endabschnitts 4 verklebt wird. Hierzu verläuft ein Teil des Endabschnittes 4 der oberen Decklage 1a, wie auch schon anhand des Beispiels in Fig. 3c) beschrieben, über die Längsebene Eb hinaus. Ferner ist die Außenseite der oberen Decklage 1a beschichtet. Eine solche Leichtbauplatte kann ebenfalls als Küchenarbeitsplatte verwendet werden.

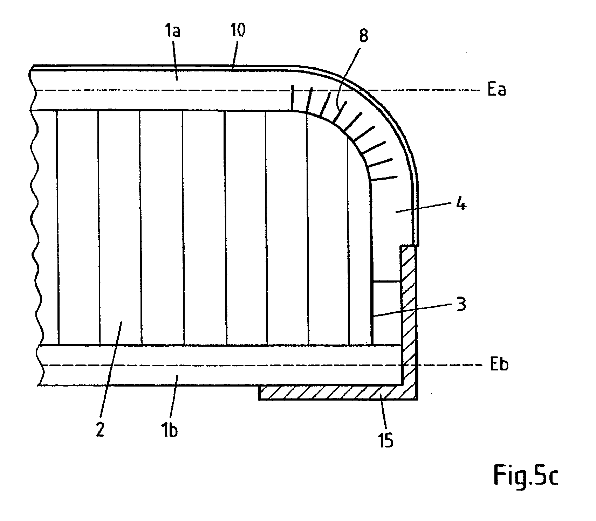

Fig. 5c) zeigt ferner eine Variante, welche im wesentlichen der in Fig. 5a) dargestellten entspricht, wobei jedoch der mit dem Profil 15 verbundene Teil des Endabschnittes 4 der oberen Decklage 1a nicht vollständig bis zur Längsebene Eb der unteren Decklage 1b verläuft, sondern vorher endet.

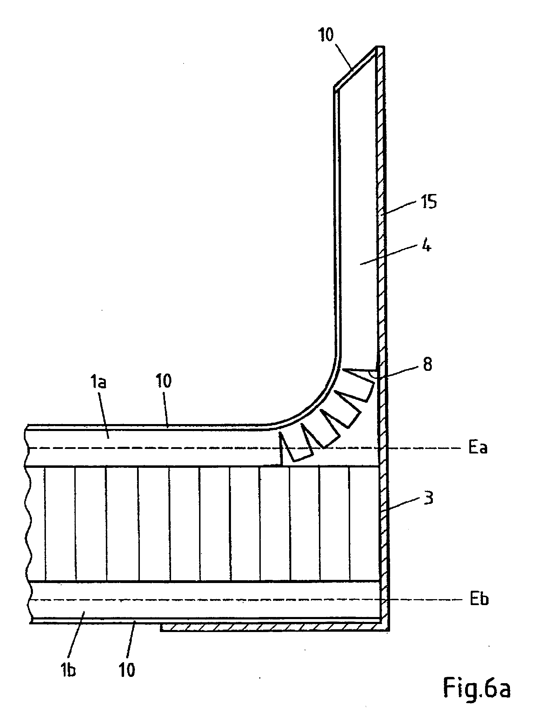

Fig. 6a) zeigt ein Ausführungsbeispiel, bei dem zwar auch ein Teil des Endabschnittes 4 einer der Decklagen 1a,1b, hier der oberen Decklage 1a, winkelig zu den Längsebenen Ea,Eb verläuft. Jedoch ist diesmal der Teil des Endabschnittes 4 nicht nach unten, sondern nach oben geführt. Die Schmalfläche 3 und die zu der Schmalfläche parallele Seite der oberen Decklage 1a wird dabei von einem Schenkel eines Profils 15 unterstützt und abgedeckt, wobei ein anderer Schenkel des Profils 15 mit der Unterseite der unteren Decklage 1b verbunden ist. Auch in diesem Fall sind die Außenseiten der Decklagen 1a,1b beschichtet. Als Querschnittsschwächung werden ferner Schlitze 8 in einem Teil der Endabschnittes 4 vorgesehen. Eine solche Leichtbauplatte kann beispielsweise als Küchenarbeitsplatte verwendet werden, wobei der Endbereich mit dem nach oben verlaufenden Endabschnitt 4 als Abschlussleiste und Wandanschluss dient.

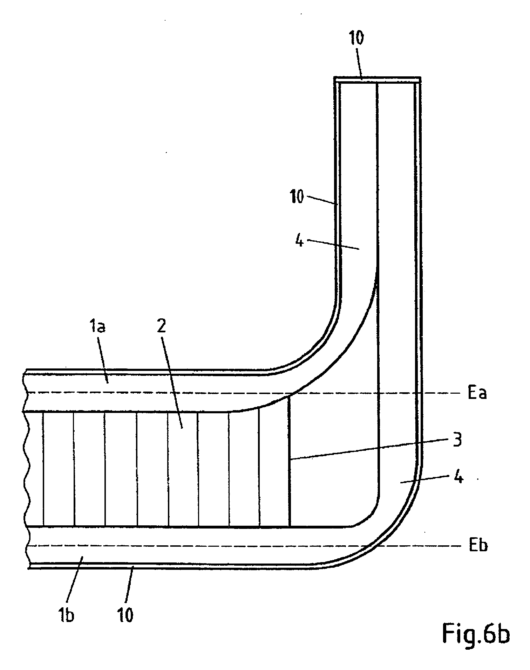

Fig. 6b) zeigt eine ähnliche Variante, bei der ebenfalls ein Teil des Endabschnittes 4 einer der Decklagen 1a,1b, hier der oberen Decklage 1b, winkelig zu den Längsebenen Ea,Eb verläuft und nach oben geführt ist. Jedoch wird hier zur Unterstützung der nach oben geführten Decklage 1b und zur Abdeckung der Schmalfläche 3 kein Profil verwendet, sondern es wird die andere der beiden Decklagen, nämlich die untere Decklage 1a, ebenfalls nach oben und parallel zur Decklage 1b geführt. Als Querschnittsschwächung ist hier eine abschnittweise Verjüngung des Querschnitts der beiden Decklagen 1a,1b vorgesehen. Die beiden parallelen Teile der Decklagen 1a,1b werden miteinander verklebt und bilden auf diese Weise ebenfalls eine für eine Küchenarbeitsplatte geeignete Abschlussleiste und einen entsprechenden Wandanschluß.

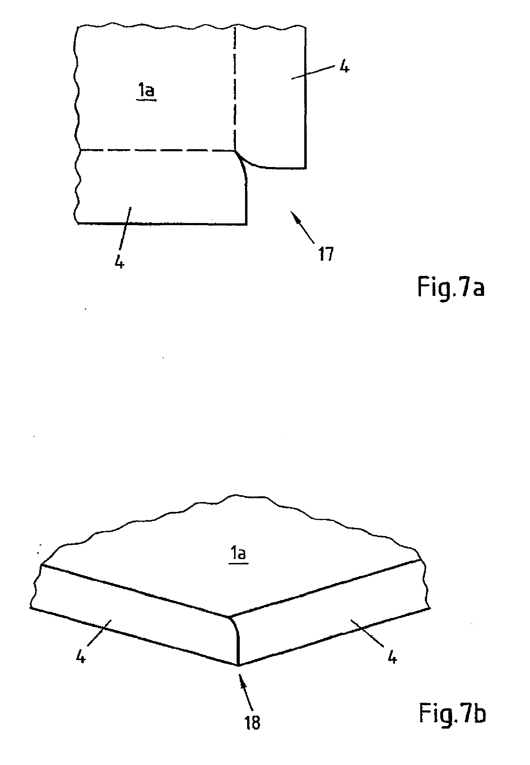

In Fig. 7 ist schließlich die Möglichkeit dargestellt, aneinandergrenzende Kanten, die in einer Ecke der Leichtbauplatte, hier einer Küchenarbeitsplatte, senkrecht aufeinander treffen, durch das erfindungsgemäße Verfahren herzustellen. Dazu wird, wie in Fig. 7a) in einer Draufsicht auf die Leichtbauplatte gezeigt ist, die zu formende Decklage 1a im Bereich der späteren Ecke 18 mit einer Ausklinkung 17, sowie im Bereich der beiden späteren Kanten jeweils mit einem freiliegenden Endabschnitt 4 versehen. Die beiden Endabschnitte 4 werden dann, wie anhand der vorangehenden Figuren beschrieben, so über die jeweilige Schmalfläche (nicht dargestellt) geführt und fixiert, dass zwei stabile Kanten und eine entsprechende Ecke 18 entstehen (Fig. 7b)).

## Patentansprüche

1. Leichtbauplatte,
- mit zwei Zellulosematerial enthaltenden Decklagen (1a,1b), wobei mindestens eine der Decklagen (1a,1b) durch eine Holzwerkstoffplatte gebildet ist,
- mit einer Mittellage (2) in Form einer Wabe, die zwischen den beiden Decklagen (1a,1b) angeordnet ist, und
- mit einer abgedeckten Schmalfläche (3), die sich von den beiden Decklagen (1a,1b) über die Mittellage (2) erstreckt,
- wobei zumindest ein Teil eines Endabschnittes (4) mindestens einer der Decklagen (1a,1b) winkelig zu einer Längsebene (Ea,Eb) einer der Decklagen (1a,1b) verläuft,
**dadurch gekennzeichnet,**
**dass** ein Schaumstoff (13) im Bereich der Schmalfläche (3) vorgesehen ist.

2. Leichtbauplatte nach Anspruch 1, **dadurch gekennzeichnet, dass** die Decklage (1a) im Endabschnitt (4) verformbar ist, wobei vorzugsweise die Decklage (1a) im Endabschnitt (4) zumindest abschnittweise eine Schwächung des Querschnitts und insbesondere Ausnehmungen, aufweist.

3. Leichtbauplatte nach Anspruch1 oder 2, **dadurch gekennzeichnet, dass** der Schaumstoff (13) zumindest abschnittweise an die Form des die Schmalfläche (3) abdeckenden Endabschnitts (4) angepasst ist und insbesondere der Form des Endabschnitts (4) entspricht.

4. Leichtbauplatte nach einem der Ansprüche 1 bis 3,
**dadurch gekennzeichnet, dass** der die Schmalfläche (3) abdeckende Endabschnitt (4) der einen Decklage (1a) und die andere Decklage (1b) zumindest in einem Abschnitt zusammenstoßen, wobei vorzugsweise in dem Abschnitt mindestens eine der Decklagen (1a,1b) mindestens eine Nut, eine Feder, die insbesondere in der mindestens einen Decklage verrastbar ist, und/oder eine Verzahnung (9a,9b) aufweist.

5. Leichtbauplatte nach Anspruch 4,
**dadurch gekennzeichnet, dass** in dem Abschnitt eine Ausnehmung (11) vorgesehen ist, die insbesondere mit Versiegelungsmasse (12) versehen ist.

6. Leichtbauplatte nach einem der Ansprüche 1 bis 5, **dadurch gekennzeichnet, dass** mindestens eine der Decklagen (1a,1b) an einer Ecke mit einer Ausklinkung (17) versehen ist.

7. Leichtbauplatte nach Anspruch 6, **dadurch gekennzeichnet, dass** die Schnittkanten der Ausklinkung (17) aneinander anliegen und eine Ecke (18) bilden.

8. Verfahren zur Herstellung einer Leichtbauplatte mit zwei Zellulosematerial enthaltenden Decklagen (1a,1b), wobei mindestens eine der Decklagen (1a,1b) durch eine Holzwerkstoffplatte gebildet wird, mit einer Mittellage (2) in Form einer Wabe, die zwischen den beiden Decklagen (1a,1b) angeordnet ist, und mit einer abgedeckten Schmalfläche (3), die sich von den beiden Decklagen (1a,1b) über die Mittellage (2) erstreckt, insbesondere einer Leichtbauplatte nach einem der Ansprüche 1 bis 7, **dadurch gekennzeichnet,**
- **dass** ein freiliegender Endabschnitt (4) mindestens einer Decklage (1a) bereitgestellt wird, der sich zumindest teilweise über eine Ebene (E), in der zumindest ein Teil der Schmalfläche (3) verläuft, hinaus erstreckt,
- **dass** die Decklage (1a) im Bereich des Endabschnittes (4) formbar gemacht wird,
- **dass** zumindest ein Teil des freiliegenden Endabschnittes (4) winkelig zu einer Längsebene (Ea,Eb) einer der Decklagen (1a,1b) verlaufend angeordnet wird, und
- **dass** nach dem Bereitstellen des freiliegenden Endabschnitts (4) ein Schaumstoff (13) im Bereich der Schmalfläche (3) appliziert wird.

9. Verfahren nach Anspruch 8, **dadurch gekennzeichnet, dass** nach dem Bereitstellen des freiliegenden Endabschnitts (4) der Schaumstoff (13) nach dem Applizieren im Bereich der Schmalfläche (3) expandiert.

10. Verfahren nach Anspruch 8 oder 9, **dadurch gekennzeichnet, dass** der freiliegende Endabschnitt (4) bereitgestellt wird, indem die Mittellage (2) und vorzugsweise die gegenüberliegende Decklage (1b) zumindest abschnittweise entfernt wird, wobei das Entfernen vorzugsweise durch zerspanende Bearbeitung, insbesondere Fräsen, erfolgt.

11. Verfahren nach einem der Ansprüche 8 bis 10, **dadurch gekennzeichnet, dass** der freiliegende Endabschnitt (4) formbar gemacht wird, indem der Querschnitt geschwächt wird und/oder indem der freiliegende Endabschnitt (4) zumindest abschnittweise einer Temperaturänderung und/oder einer Feuchtigkeitsänderung unterzogen wird.

12. Verfahren nach Anspruch 11, **dadurch gekennzeichnet, dass** das Schwächen des Querschnitts durch Reduzieren der Materialstärke des Endabschnitts (4), insbesondere durch Einfräsen von Nuten (5) und/oder Bohrungen, erfolgt.

13. Verfahren nach einem der Ansprüche 8 bis 12, **dadurch gekennzeichnet, dass** mindestens eine der Decklagen (1a,1b) an einer Ecke mit einer Ausklinkung (17) versehen wird.

14. Verfahren nach Anspruch 13, **dadurch gekennzeichnet, dass** die beiden Endabschnitte (4) über die jeweilige Schmalfläche (3) geführt und fixiert werden, derart, dass die Schnittkanten der Ausklinkung (17) aneinander anliegen und eine Ecke (18) bilden.

## Claims

1. A lightweight board,
- with two covering layers (1a, 1b) containing cellulose material, wherein at least one of the covering layers (1a, 1b) is formed by a wood based material plate,
- with a central layer (2) in the form of a honeycomb, which is arranged between the two covering layers (1a, 1b), and
- with a covered narrow face (3), which extends from the two covering layers (1a, 1b) over the central layer (2),
- wherein at least one part of an end section (4) of at least one of the covering layers (1a, 1b) runs at an angle to a longitudinal plane (Ea, Eb) of one of the covering layers (1a, 1b),
**characterised in that**
a foam material (13) is provided in the region of the narrow face (3).

2. The lightweight board in accordance with Claim 1, **characterised in that** the covering layer (1a) can be deformed in the end section (4), wherein the covering layer (1a) in the end section (4) preferably has, at least in some sections, a weakening of the cross-section, and in particular cut-outs.

3. The lightweight board in accordance with Claim 1 or 2, **characterised in that** the foam material (13) at least in some sections is adapted to the shape of the end section (4) covering the narrow face (3), and in particular corresponds to the shape of the end section (4).

4. The lightweight board in accordance with one of the Claims 1 to 3, **characterised in that** the end section (4) of the one covering layer (1a) covering the narrow face (3) and the other covering layer (1b), butt together, at least in one section, wherein in the section at least one of the covering layers (1a, 1b) preferably has at least one groove, spring, which in particular can be latched into the at least one covering layer, and/or toothed profile (9a, 9b).

5. The lightweight board in accordance with Claim 4, **characterised in that** in the section a cut-out (11) is provided, which in particular is provided with a mass of sealant (12).

6. The lightweight board in accordance with one of the Claims 1 to 5, **characterised in that** at least one of the covering layers (1a, 1b) is provided at one corner with a notch (17) .

7. The lightweight board in accordance with Claim 6, **characterised in that** the cut edges of the notch (17) fit next to one another, and form a corner (18).

8. A method for the manufacture of a lightweight board with two covering layers (1a, 1b) containing cellulose material, wherein at least one of the covering layers (1a, 1b) is formed by a wood based material plate, with a central layer (2) in the form of a honeycomb, which is arranged between the two covering layers (1a, 1b) and with a covered narrow face (3), which extends from the two covering layers (1a, 1b) over the central layer (2), in particular a lightweight board in accordance with one of the Claims 1 to 7, **characterised**
- **in that** an exposed end section (4) of at least one covering layer (1a) is provided, which extends at least partly over a plane (E), in which at least one part of the narrow face (3) runs,
- **in that** the covering layer (1a) is made deformable in the region of the end section (4),
- **in that** at least one part of the exposed end section (4) is arranged such that it runs at an angle to a longitudinal plane (Ea, Eb) of one of the covering layers (1a, 1b), and
- **in that**, after the preparation of the exposed end section (4), a foam material (13) is applied in the region of the narrow face (3).

9. The method in accordance with Claim 8, **characterised in that** after the preparation of the exposed end section (4) the foam material (13) expands after application in the region of the narrow face (3).

10. The method in accordance with Claim 8 or 9, **characterised in that** the exposed end section (4) is provided by removing the central layer (2), and preferably the opposite covering layer (1b), at least in some sections, wherein the removal preferably takes place by means of a chip-forming process, in particular by milling.

11. The method in accordance with one of the Claims 8 to 10, **characterised in that** the exposed end section (4) is made deformable by weakening the cross-section and/or by subjecting the exposed end section (4), at least in some sections, to an alteration in temperature and/or an alteration in humidity.

12. The method in accordance with Claim 11, **characterised in that** the weakening of the cross-section takes place by means of a reduction of the material strength of the end section (4), in particular by the milling of grooves (5) and/or holes.

13. The method in accordance with one of the Claims 8 to 12, **characterised in that** at least one of the covering layers (1a, 1b) is provided at one corner with a notch (17).

14. The method in accordance with Claim 13, **characterised in that** the two end sections (4) are guided over the respective narrow face (3) and fixed such that the cut edges of the notch (17) fit next to one another and form a corner (18).

## Revendications

1. Panneau alvéolaire, comprenant
- deux couches de revêtement (1a, 1b) contenant du matériau de cellulose, au moins l'une des couches de recouvrement (1a, 1b) étant formée par un panneau de matériau de bois,
- une couche centrale (2) sous la forme d'une alvéole, qui est disposée entre les deux couches de recouvrement (1a, 1b), et
- une surface étroite (3) recouverte, qui s'étend depuis les deux couches de revêtement (1a, 1b) sur la couche centrale (2),
- au moins une partie d'un tronçon d'extrémité (4) d'au moins l'une des couches de recouvrement (1a, 1b) étant agencée en formant un angle par rapport à un plan longitudinal (Ea, Eb) d'une des couches de recouvrement (1a, 1b),
**caractérisé en ce**
**qu'**une mousse (13) est prévue dans la zone de la surface étroite (3).

2. Panneau alvéolaire selon la revendication 1, **caractérisé en ce que** la couche de recouvrement (1a) peut être déformée dans le tronçon d'extrémité (4), sachant que de préférence la couche de recouvrement (1a) présente dans le tronçon d'extrémité (4) au moins par endroits un affaiblissement de la section et en particulier des évidements.

3. Panneau alvéolaire selon la revendication 1 ou 2, **caractérisé en ce que** la mousse (13) est adaptée au moins par endroits à la forme du tronçon d'extrémité (4) recouvrant la surface étroite (3) et correspond en particulier à la forme du tronçon d'extrémité (4).

4. Panneau alvéolaire selon l'une des revendications 1 à 3, **caractérisé en ce que** le tronçon d'extrémité (4), recouvrant la surface étroite (3), de l'une des couches de recouvrement (1a) et l'autre couche de recouvrement (1b) se rejoignent au moins dans un tronçon, au moins l'une des couches de recouvrement (1a, 1b) de préférence présentant dans le tronçon au moins une rainure, une languette qui peut être encliquetée en particulier dans la au moins une couche de recouvrement, et/ou une denture (9a, 9b).

5. Panneau alvéolaire selon la revendication 4, **caractérisé en ce qu'**il est prévu dans le tronçon un évidement (11), qui est doté en particulier de masse de scellement (12).

6. Panneau alvéolaire selon l'une des revendications 1 à 5, **caractérisé en ce qu'**au moins l'une des couches de recouvrement (1a, 1b) est dotée sur un angle d'une encoche (17).

7. Panneau alvéolaire selon la revendication 6, **caractérisé en ce que** les arêtes de coupe de l'encoche (17) sont contigües et forment un angle (18).

8. Procédé pour fabriquer un panneau alvéolaire avec deux couches de recouvrement (1a, 1b) contenant du matériau de cellulose, sachant qu'au moins une des couches de recouvrement (1a, 1b) est formée par un panneau à base de matériau de bois, une couche centrale (2) sous la forme d'une alvéole, qui est disposée entre les deux couches de recouvrement (1a, 1b), et une surface étroite (3) recouverte, qui s'étend depuis les deux couches de recouvrement (1a, 1b) sur la couche centrale (2), en particulier d'un panneau alvéolaire selon l'une des revendications 1 à 7, **caractérisé**
- **en ce qu'**un tronçon d'extrémité (4) dégagé d'au moins une couche de recouvrement (1a) est mis à disposition, lequel tronçon étant au moins en partie au-delà d'un plan (E) dans lequel est agencée au moins une partie de la surface étroite (3),
- **en ce que** la couche de recouvrement (1a) est rendue façonnable dans la zone du tronçon d'extrémité (4),
- **en ce qu'**au moins une partie du tronçon d'extrémité (4) dégagé est disposée en formant un angle par rapport à un plan longitudinal (Ea, Eb) de l'une des couches de recouvrement (1a, 1b) et
- **en ce que**, après la mise à disposition du tronçon d'extrémité (4) dégagé, une mousse (13) est appliquée dans la zone de la surface étroite (3).

9. Procédé selon la revendication 8, **caractérisé en ce que**, après la mise à disposition du tronçon d'extrémité (4) dégagé, la mousse (13) est expansée après l'application dans la zone de la surface étroite (3).

10. Procédé selon la revendication 8 ou 9, **caractérisé en ce que** le tronçon d'extrémité (4) dégagé est mis à disposition du fait que la couche centrale (2) et de préférence la couche de recouvrement (1b) opposée sont enlevées au moins par endroits, l'enlèvement se fait de préférence par un usinage avec enlèvement de copeaux, en particulier fraisage.

11. Procédé selon l'une des revendications 8 à 10, **caractérisé en ce que** le tronçon d'extrémité (4) dégagé est rendu façonnable du fait que la section est affaiblie et/ou que le tronçon d'extrémité (4) dégagé est soumis au moins par endroits à une variation de température et/ou une variation d'humidité.

12. Procédé selon la revendication 11, **caractérisé en ce que** l'affaiblissement de la section s'effectue par réduction de l'épaisseur de matériau du tronçon d'extrémité (4), en particulier par fraisage intérieur de rainures (5) et/ou d'alésages.

13. Procédé selon l'une des revendications 8 à 12, **caractérisé en ce qu'**au moins l'une des couches de recouvrement (1a, 1b) est dotée sur un angle d'une encoche (17).

14. Procédé selon la revendication 13, **caractérisé en ce que** les deux tronçons d'extrémité (4) sont guidés sur la surface étroite (3) respective et sont fixés de telle sorte que les arêtes de coupe de l'encoche (17) sont contigües et forment un angle (18).
